# EUROPEAN PATENT APPLICATION

(11) **EP 3 878 280 A1**
(43) Date of publication of application: **15.09.2021**
(21) Application number: 21153583.6
(22) Date of filing: 26.01.2021
(51) Int. Cl.: A01N 25/24, A01N 25/34, A01N 31/02, A01N 33/22, A01N 31/10, A01N 35/02, A01N 35/06, A01N 37/06, A01N 43/80, B05D 5/00, B05D 7/24, C09D 5/14, C09J 1/00

(54) **ANTIBACTERIAL SUBSTRATE AND PREPARATION METHOD THEREOF**

(30) Priority: 12.03.2020 CN 202010170288
(71) Applicant: Shenzhen Orient Technology Co., Ltd, Shenzhen, Guandong 518042 (CN)
(72) Inventor: QIU, Zhilin, Shenzhen, 518042 (CN); QIU, Tian, Shenzhen, 518042 (CN)
(74) Representative: Petculescu, Ana-Maria

(57) **Abstract**

An antibacterial substrate and a preparation method thereof are disclosed. The antibacterial substrate includes a substrate, a layer of antibacterial coating provided on the upper end surface of the substrate, and a bonding layer, through which the antibacterial coating is bonded to the surface of the substrate. The antibacterial substrate employs a non-metal oxide antibacterial agent/bactericide, thereby effectively avoiding the harm of metal ions to the human body.

## Description

### TECHNICAL FIELD

The present invention relates to an antibacterial substrate and a preparation method thereof.

### BACKGROUND

Conventional antibacterial coatings and antibacterial products mainly use a metal oxide, such as a metal oxide having silver ions, titanium ions, to prevent bacteria from reproducing and surviving by breaking the cell walls of bacteria. However, the silver ions and titanium ions that are free on the surface of the used products are always harmful to people. After all, there is no standard for the amount of slow-release metal of the coating. When the released amount is large, although it can achieve sterilization and antibacterial effects, it is difficult for users to judge whether the released amount will harm the human body. Moreover, the antibacterial coatings using a metal oxide have different processing abilities on various substrates, and a specific process must be adopted for each metal oxide to be processed onto the substrate.

### SUMMARY

The technical problem to be solved by the present invention is an antibacterial substrate, which uses a non-metal oxide antibacterial agent/bactericide and therefore effectively avoids the harm of metal ions to the human body, and a preparation method thereof.

The present invention is realized through the following technical solution: an antibacterial substrate, including a substrate, a layer of antibacterial coating provided on the upper end surface of the substrate, and a bonding layer, through which the antibacterial coating is bonded to the surface of the substrate, wherein said antibacterial coating employs a non-metal oxide antibacterial agent.

As a preferred technical solution, a screen printing or functional coating is added to the other surface of the substrate.

As a preferred technical solution, alternatively, a layer of functional coating is provided between the antibacterial coating and the bonding layer.

As a preferred technical solution, the non-metal oxide antibacterial agent is one or a combination of several of sodium pentachlorophenate, p-nitrophenol, ethylene glycol-methyl ether, glutaraldehyde, o-hydroxycyclopentenedione, tetrachloro-p-benzoquinone, sorbic acid, 2-butyl-1,2-benzisothiazolin-3-one, dimethyl fumarate, and several solvents.

As a preferred technical solution, the bonding layer is prepared by mixing silica sol, water, formaldehyde, methanol, ethanol, isopropanol, sodium hydroxide, sulfuric acid, nitric acid, hydrochloric acid, leveling agent, stabilizer, and auxiliary agent, and the antibacterial coating is fixed on the surface of the substrate via the bonding layer.

An antibacterial substrate, wherein the specific steps are as follows:
Step 1: selecting any kind of substrate that needs antibacterial treatment, and then disposing a bonding layer on the substrate in any way;
Step 2: disposing or not disposing a layer of functional coating on the upper end of the bonding layer according to the actual application purpose;
Step 3: disposing a layer of antibacterial coating made of non-metal oxide on the upper end of a silica sol or the upper end of the functional coating;
Step 4: curing the substrate after completion of the application;
Step 5: in the step 4, the curing temperature of the substrate is 80-300°C, and the curing time is 30-180 minutes.

The beneficial effects of the present invention include: selecting a non-metal/and non-metal oxide antibacterial agent, and selecting a silica sol as a binder; and that the processing technology is simple and adjustable, the substrate may be materials such as ceramics, plastics and the like, the substrate materials are diversified, and the silica sol has a good bonding effect on the substrates such as ceramics, plastics and the like.

### BRIEF DESCRIPTION OF DRAWINGS

In order to illustrate technical solutions in the examples of the present invention or the prior art more clearly, the drawings that need to be used in the description of the examples or the prior art will be introduced briefly below. Apparently, the drawings described below are only some examples of the present invention, and other drawings may be obtained by those of ordinary skill in the art in accordance with these drawings without any creative effort.

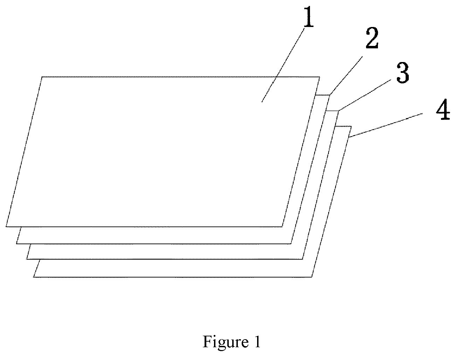

Figure 1 is a schematic diagram of the structure of the present invention.

### DETAILED DESCRIPTION OF THE EMBODIMENTS

All features disclosed or steps in all methods or processes disclosed in this specification may be combined in any manner, in addition to mutually exclusive features and/or steps.

Any feature disclosed in this specification (including any appended claims, abstract and drawings) may be replaced by other alternative features that are equivalent or have similar purpose, unless specifically stated. That is, each feature is just one example of a series of equivalent or similar features, unless specifically stated.

In the description of the present invention, it should be understood that orientations or positional relationships indicated by terms "one end", "the other end", "outer side", "upper", "inner side", "horizontal", "coaxal", "central", "end", "length", "outer end" and the like are based on the orientation or positional relationships shown in the drawings, and are merely for the convenience of describing the present invention and simplifying the description, rather than indicating or implying that a device or element referred to must be in a particular orientation, or be constructed and operated in a particular orientation, and therefore should not be understood as a limitation to the present invention.

In addition, in the description of the present invention, the meaning of "a plurality of' is at least two, such as two, three, unless otherwise specifically defined.

The terms such as "upper", "above", "lower", "below" and the like representing a spatial relative position as used in the present invention are for convenience of illustrative purposes to describe the relationship of one unit or feature as shown in the drawings relative to another unit or feature. The term of spatial relative position may be intended to include different orientations of the device other than those shown in the drawings in use or operation. For example, if the device in the drawings is turned over, the unit described as being located "below" or "under" other units or features will be located "above" other units or features. Therefore, the exemplary term "below" can encompass both the above and below orientations. The device may be oriented in other ways (rotated by 90 degrees or in other orientations), and construe the descriptions related to space used in this context accordingly.

In the present invention, the terms "disposing", "muff-coupling", "connecting", "throughout", "splicing" and the like should be understood in a broad sense, unless otherwise clearly specified and limited. For example, it can be either fixedly connected or detachably connected, or integrated; it can be either mechanically connected or electrically connected; it can be either directly connected or indirectly connected through an intermediate medium, and can be the inner communication of two elements or the interaction of two elements, unless otherwise clearly defined. For those of ordinary skill in the art, the specific meaning of the above terms in the present invention may be understood according to specific circumstances.

As shown in Figure 1, an antibacterial substrate of the present invention includes a substrate 4, a layer of antibacterial coating 1 provided on the upper end surface of the substrate 4, and a bonding layer 3, through which the antibacterial coating 1 is bonded to the surface of the substrate, and the antibacterial coating 1 employs a non-metal oxide antibacterial agent.

Wherein, a screen printing or functional coating is added to the other surface of the substrate 4. Alternatively, a layer of functional coating 2 is provided between the antibacterial coating 1 and the bonding layer 3. In this example, the functional coating may have, but not limited to, functions such as anti-glare, anti-reflection, light absorption, anti-fingerprint, anti-moire, brightening, increasing transmissivity, increasing contrast, increasing color gamut and the like.

In this example, the non-metal oxide antibacterial agent is one or a combination of several of sodium pentachlorophenate, p-nitrophenol, ethylene glycol-methyl ether, glutaraldehyde, o-hydroxycyclopentenedione, tetrachloro-p-benzoquinone, sorbic acid, 2-butyl-1,2-benzisothiazolin-3-one, dimethyl fumarate, and several solvents.

The bonding layer 3 is prepared by mixing silica sol, water, formaldehyde, methanol, ethanol, isopropanol, sodium hydroxide, sulfuric acid, nitric acid, hydrochloric acid, leveling agent, stabilizer, and auxiliary agent, and the antibacterial coating is fixed on the surface of the substrate via the bonding layer.

Specific steps are as follows:
(1) selecting any kind of substrate that needs antibacterial treatment, and then disposing a bonding layer on the substrate in any way;
(2) disposing or not disposing a layer of functional coating on the upper end of the bonding layer according to the actual application purpose;
(3) disposing a layer of antibacterial coating made of non-metal oxide on the upper end of a silica sol or the upper end of the functional coating;
(4) curing the substrate after completion of the application;
(5) the curing temperature of the substrate is 80-300°C, and the curing time is 30-180 minutes.

With respect to different application purposes, adoption and selection of the substrate, the present invention lists the following several kinds of construction methods:

First: The silica sol is first spray coated or roll coated or spin coated onto the substrate, then other functional coatings are spray coated or roll coated or spin coated, and an antibacterial/bactericidal solvent is finally spray coated or roll coated or spin coated, and cured. This process is suitable for use in products having requirements for functional coating and having requirements for lasting and durable antibacterial/bactericidal functions.

Second: The silica sol is first spray coated or roll coated or spin coated onto the substrate, then other functional coatings are spray coated or roll coated or spin coated, and an antibacterial or bactericidal solvent is finally spray coated or roll coated or spin coated, and cured. This process is suitable for use in products having requirements for functional coating and having requirements for lasting and durable antibacterial/bactericidal functions.

Third: The silica sol is first spray coated or roll coated or spin coated onto the substrate, then other functional coatings are spray coated or roll coated or spin coated, and an antibacterial/bactericidal solvent is finally spray coated or roll coated or spin coated, and cured. This process is suitable for use in products having requirements for functional coating and having requirements for lasting and durable antibacterial/bactericidal functions.

Fourth: The silica sol is first spray coated or roll coated or spin coated onto the substrate, then an antibacterial/bactericidal solvent is spray coated or roll coated or spin coated, and cured. This process is suitable for products that improve the degree of durability of the antibacterial/bactericidal coatings.

Fifth: The silica sol is first spray coated or roll coated or spin coated onto the substrate and cured, then an antibacterial/bactericidal solvent is spray coated or roll coated or spin coated, and cured again. This process is suitable for products that enhance antibacterial/bactericidal coating and antibacterial/bactericidal efficiency.

The beneficial effects of the present invention include: selecting a non-metal and/or non-metal oxide antibacterial agent, and selecting a silica sol as a binder; and that the processing technology is simple and adjustable, the substrate may be materials such as ceramics, plastics and the like, the substrate materials are diversified, and the silica sol has a good bonding effect on the substrates such as ceramics, plastics and the like.

The above are merely the specific embodiments of the present invention, but the protection scope of the present invention is not limited thereto. Any changes or replacements that are conceived without any creative efforts should be included within the protection scope of the present invention. Therefore, the protection scope of the present invention should be regarded as the protection scope defined by the claims.

## Claims

1. An antibacterial substrate, comprising a substrate, a layer of an antibacterial coating provided on an upper end surface of the substrate, and a bonding layer; wherein the antibacterial coating is bonded to the upper end surface of the substrate through the bonding layer, and the antibacterial coating employs a non-metal oxide antibacterial agent.

2. The antibacterial substrate according to claim 1, wherein a screen printing or a functional coating is added to a lower end surface of the substrate.

3. The antibacterial substrate according to claim 1, wherein a layer of a functional coating is provided between the layer of the antibacterial coating and the bonding layer.

4. The antibacterial substrate according to claim 1, wherein the non-metal oxide antibacterial agent is at least one selected from the list consisting of sodium pentachlorophenate, p-nitrophenol, ethylene glycol-methyl ether, glutaraldehyde, o-hydroxycyclopentenedione, tetrachloro-p-benzoquinone, sorbic acid, 2-butyl-1,2-benzisothiazolin-3-one, dimethyl fumarate, and solvents.

5. The antibacterial substrate according to claim 1, wherein the bonding layer is prepared by mixing silica sol, water, formaldehyde, methanol, ethanol, isopropanol, sodium hydroxide, sulfuric acid, nitric acid, hydrochloric acid, a leveling agent, a stabilizer, and an auxiliary agent.

6. A method for preparing an antibacterial substrate, comprising the following steps:
step 1: selecting a substrate needing an antibacterial treatment, and then disposing a bonding layer on the substrate;
step 2: disposing or not disposing a layer of a functional coating on an upper end of the bonding layer according to an application purpose;
step 3: disposing a layer of an antibacterial coating made of non-metal oxide on the upper end of the bonding layer or an upper end of the layer of the functional coating;
step 4: curing the substrate after a completion of step 3;
step 5: in step 4, a curing temperature of the substrate is 80-300°C, and a curing time is 30-180 minutes.
